(19) Europäisches Patentamt
European Patent Office
Office européen des brevets

(11) **EP 4 289 264 A1**

(12) **EUROPEAN PATENT APPLICATION**
published in accordance with Art. 153(4) EPC

(43) Date of publication:
**13.12.2023 Bulletin 2023/50**

(51) International Patent Classification (IPC):
**A01K 63/06** (2006.01)

(21) Application number: **22898637.8**

(52) Cooperative Patent Classification (CPC):
**A01K 63/06**

(22) Date of filing: **25.11.2022**

(86) International application number:
**PCT/JP2022/043454**

(87) International publication number:
**WO 2023/095855 (01.06.2023 Gazette 2023/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **25.11.2021 JP 2021191258**

(71) Applicant: **Niterra Co., Ltd.**
**Nagoya-shi, Aichi 461-0005 (JP)**

(72) Inventors:
• **ARIZUMI Takuro**
  **Nagoya-shi, Aichi 461-0005 (JP)**
• **OSAWA Norimasa**
  **Nagoya-shi, Aichi 461-0005 (JP)**
• **KAMEI Shunsuke**
  **Nagoya-shi, Aichi 461-0005 (JP)**

(74) Representative: **Grünecker Patent- und Rechtsanwälte**
**PartG mbB**
**Leopoldstraße 4**
**80802 München (DE)**

(54) **WATER QUALITY ADJUSTMENT SYSTEM**

(57) A water quality adjustment system (1) includes a measurement section (30), a judgment section (32), and an adjustment section (34). The measurement section (30) measures the ammonia nitrogen concentration of breeding water in a breeding tank for breeding an aquatic organism. The judgment section (32) judges whether or not the ammonia nitrogen concentration measured by the measurement section (30) has exceeded a threshold value. When the judgment section (32) judges that the ammonia nitrogen concentration has exceeded the threshold value, the adjustment section (34) performs, as an adjustment operation, at least one of an operation of lowering the temperature of the breeding water (10A), an operation of lowering the pH of the breeding water (10A), and an operation of increasing the salinity concentration of the breeding water (10A).

FIGURE

EP 4 289 264 A1

**Description**

TECHNICAL FIELD

The present invention relates to a water quality adjustment system.

BACKGROUND ART

In a breeding tank for breeding an aquatic organism such as fish, excrement of fish, etc. are decomposed by microorganisms, whereby ammonia is generated. If the ammonia concentration of breeding water becomes high, the toxicity of ammonia may impose negative influence on the aquatic organism. Patent Literature 1 discloses determining, on the basis of the ammonia concentration, a timing when water in a pond must be exchanged, and displaying the timing on a display section. This configuration prompts exchange of water at the timing displayed on the display section, thereby lowering the ammonia concentration and thus lowering the toxic effects of ammonia.

CITATION LIST

PATENT LITERATURE

Patent Literature 1: JP2021-29144A

SUMMARY OF INVENTION

TECHNICAL PROBLEM

Incidentally, if the toxic effects of ammonia can be lowered by a method other than lowering the ammonia concentration, a wider range of means can be employed for lowering the toxic effects of ammonia.
The present invention provides a technique which can lower the toxic effects of ammonia in breeding water without lowering the ammonia concentration of the breeding water.

SOLUTION TO PROBLEM

[1] A water quality adjustment system of the present invention comprises a measurement section, a judgment section, and an adjustment section. The measurement section measures the ammonia nitrogen concentration of breeding water in a breeding tank for breeding an aquatic organism. The judgment section judges whether or not the ammonia nitrogen concentration measured by the measurement section has exceeded a threshold value. When the judgment section judges that the ammonia nitrogen concentration has exceeded the threshold value, the adjustment section performs, as an adjustment operation, at least one of an operation of lowering the temperature of the breeding water, an operation of lowering the pH of the breeding water, and an operation of increasing the salinity concentration of the breeding water.
When the adjustment operation is performed, of un-ionized ammonia ($NH_3$) and ammonium ion ($NH4^+$) contained in the breeding water, the amount of un-ionized ammonia, which is high in toxicity, is lowered; i.e., the ratio of the un-ionized ammonia decreases. As a result, the toxic effects of ammonia in the breeding water are lowered. Namely, the water quality adjustment system can lower the toxic effects of ammonia in the breeding water without lowering the ammonia concentration of the breeding water.
[2] The adjustment operation may be an operation of supplying adjustment water to the breeding tank, the adjustment water satisfying at least one of a condition that the temperature of the adjustment water is lower than that of the breeding water, a condition that the pH of the adjustment water is lower than that of the breeding water, and a condition that the salinity concentration of the adjustment water is higher than that of the breeding water.
By virtue of this configuration, it is possible to lower the ratio of the un-ionized ammonia, which is high in toxicity, by supplying the adjustment water to the breeding tank, thereby lowering the toxic effects of ammonia in the breeding water.
[3] The adjustment section may determine the amount of the adjustment water on the basis of the ammonia nitrogen concentration measured by the measurement section.
By virtue of this configuration, it is possible to lower the toxic effects of ammonia in the breeding water more appropriately as compared with a configuration in which a fixed amount of adjustment water is supplied in the adjustment operation.
[4] In the adjustment operation, the adjustment section dividingly supplies the determined amount of the adjustment water to the breeding tank in a plurality of operations.

By virtue of this configuration, it is possible to prevent sudden changes of the quality of the breeding water, which would otherwise result in adverse influences on an aquatic organism.

[5] The water quality adjustment system may further comprise a drain section including a drain valve provided in a drain pipe connected to the breeding tank. The drain valve may be switched between a water drain state for draining the breeding water in the breeding tank from the drain pipe and a water stoppage state for stopping the drainage of the breeding water through the drain valve.

In a configuration in which the adjustment operation is performed by supplying the adjustment water to the breeding tank, the amount of the breeding water in the breeding tank increases as a result of supply of the adjustment water. In contrast, by virtue of the above-described configuration, the breeding water in the breeding tank can be drained from the drain section.

[6] The adjustment section may include a water supply valve provided in a supply passage for supplying the adjustment water to the breeding tank, and a control section for controlling the water supply valve. The water supply valve may be switched between a permitting state for permitting flow of water toward the breeding tank and a prohibiting state for prohibiting the flow of water toward the breeding tank. The adjustment section may perform the adjustment operation of supplying the adjustment water to the breeding tank as a result of the control section switching the water supply valve to the permitting state. During at least a portion of a period during which the control section controls the water supply valve to the permitting state, the control section may control the drain valve to the drain state, thereby draining the breeding water in the breeding tank in parallel with the adjustment operation.

By virtue of this configuration, it is possible to prevent the amount of the breeding water in the breeding tank from increasing when the breeding water is supplied to the breeding tank.

[7] The water quality adjustment system may further comprise a water quality measurement section which measures at least one of the temperature of the breeding water, the pH of the breeding water, and the salinity concentration of the breeding water; and a calculation section which calculates a second threshold value on the basis of the value(s) measured by the water quality measurement section. The adjustment section may stop the adjustment operation when the second threshold value exceeds the ammonia nitrogen concentration measured by the measurement section.

By virtue of this configuration, the toxic effects of ammonia in the breeding water can be more reliably lowered to a desired level.

ADVANTAGEOUS EFFECT OF INVENTION

The present invention makes it possible to lower the toxic effects of ammonia in breeding water without lowering the ammonia concentration of the breeding water.

BRIEF DESCRIPTION OF DRAWING

FIGURE is a diagram schematically showing a water quality adjustment system.

DESCRIPTION OF EMBODIMENTS

<First embodiment>

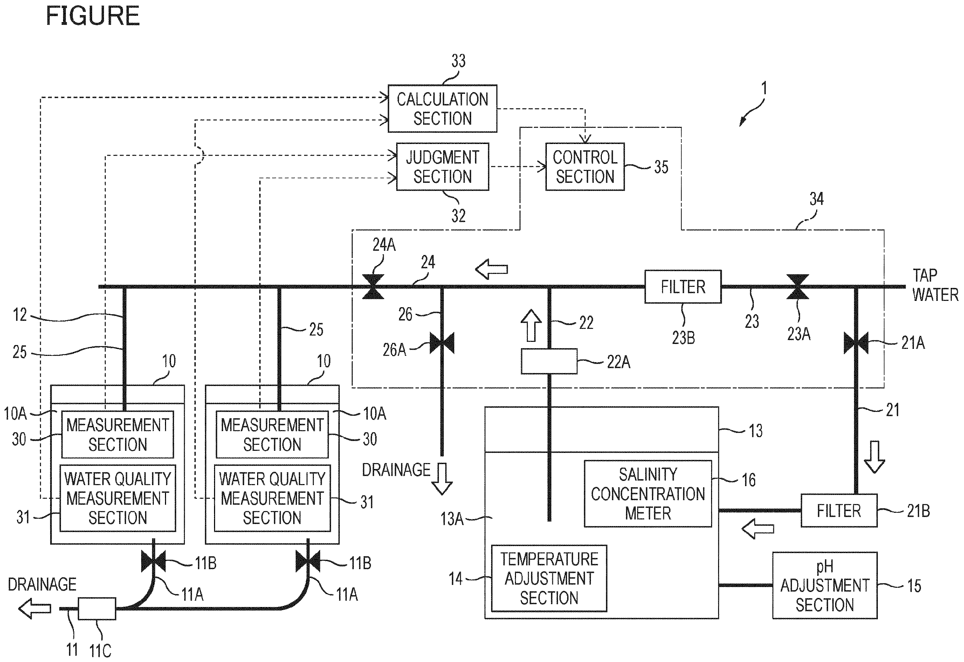

A water quality adjustment system 1 shown in the figure is a system for adjusting the quality of breeding water 10A in breeding tanks 10 in which an aquatic organism such as fish is bred. The water quality adjustment system 1 includes the breeding tanks 10, a drain section 11, a water supply section 12, a water storage tank 13, a temperature adjustment section 14, a pH adjustment section 15, and a salinity concentration meter 16.

The plurality of breeding tanks 10 are provided separately. The breeding water 10A in the breeding tanks 10 is drained from the drain section 11. The drain section 11 includes drain pipes 11A, drain valves 11B, and a drain pump 11C. The drain pipes 11A are connected to bottom portions of the breeding tanks 10. The drain valves 11B are provided in the drain pipes 11A. Each drain valve 11B is switched between a drain state for draining the breeding water 10A in the breeding tank 10 through the drain pipe 11A and a water stoppage state for stopping drainage of the breeding water 10A through the drain valve 11B. The drain pump 11C is provided in the drain pipe 11A. The drain section 11 drains the breeding water 10A from the breeding tank 10 as a result of the drain pump being activated when the drain valve 11B is in the drain state.

The water supply section 12 has a function of supplying water to the breeding tanks 10. Water supplied to the breeding tanks 10 by the water supply section 12 is stored water 13A in the water storage tank 13, tap water, or a mixture of the stored water 13A and tap water.

The temperature of the stored water 13A has been adjusted beforehand to be lower than the temperature of the breeding water 10A. The temperature of the stored water 13A is adjusted by the temperature adjustment section 14. The temperature adjustment section 14 has a function of lowering the temperature of the stored water 13A and is configured, for example, as a chiller. The temperature adjustment section 14 adjusts the temperature of the stored water 13A to a desired water temperature.

The pH of the stored water 13A has been adjusted beforehand to be lower than the pH of the breeding water 10A. The pH of the stored water 13A is adjusted by the pH adjustment section 15. The pH adjustment section 15 has a function of lowing the pH of the stored water 13A and is configured, for example, as a calcium reactor. The pH adjustment section 15 adjusts the pH of the stored water 13A to a desired pH.

The salinity concentration of the stored water 13A has been adjusted beforehand to be higher than the salinity concentration of the breeding water 10A. The stored water 13A is artificial seawater produced by adding salt to tap water. The stored water 13A having a desired salinity concentration is produced by adding a predetermined amount of salt to tap water. Also, the salinity concentration of the stored water 13A is measured by the salinity concentration meter 16. The amount of salt to be added may be adjusted on the basis of the salinity concentration measured by the salinity concentration meter 16.

The water supply section 12 includes a first supply passage 21, a second supply passage 22, a third supply passage 23, a fourth supply passage 24, fifth supply passages 25, and a branching drain passage 26.

The first supply passage 21 is a passage for supplying tap water to the water storage tank 13. A valve 21A and a filter 21B are provided in the first supply passage 21. The valve 21A is switched between a permitting state for permitting flow of tap water into the water storage tank 13 and a prohibiting state for prohibiting the flow of tap water into the water storage tank 13.

The second supply passage 22 is a passage through which the stored water 13A in the water storage tank 13 is sucked. A pump 22A is provided in the second supply passage 22. The pump 22A performs water supply operation of supplying the stored water 13A to the downstream side. Notably, the "downstream side" means the side where the breeding tanks 10 are provided.

The third supply passage 23 is a passage for supplying tap water. A valve 23A and a filter 23B are provided in the third supply passage 23. The valve 23A is switched between a permitting state for permitting flow of tap water toward the downstream side and a prohibiting state for prohibiting the flow of tap water toward the downstream side. A downstream end of the third supply passage 23 merges with a downstream end of the second supply passage 22.

The fourth supply passage 24 extends toward the downstream side from the downstream end of the second supply passage 22 and the downstream end of the third supply passage 23. Namely, the fourth supply passage 24 extends toward the downstream side from a point where the second supply passage 22 and the third supply passage 23 merge. A water supply valve 24A is provided in the fourth supply passage 24. The water supply valve 24A is switched between a permitting state for permitting flow of water toward the breeding tanks 10 and a prohibiting state for prohibiting the flow of water toward the breeding tanks 10.

The fifth supply passages 25 extend toward the downstream side from a downstream end of the fourth supply passage 24. The fifth supply passages 25 are individually provided for the plurality of breeding tanks 10. Each fifth supply passage 25 branches off the downstream end of the fourth supply passage 24. An unillustrated ball tap is provided in each fifth supply passage 25. Namely, the water supply section 12 (specifically, the fifth supply passages 25) starts the supply of water to the breeding tank 10 when the breeding water 10A in the breeding tank 10 is drained and stops the water supply when breeding water 10A in the breeding tank 10 reaches a predetermined level.

The branching drain passage 26 is a passage which branches off a portion of the fourth supply passage 24, the portion being located on the upstream side of the water supply valve 24A. The branching drain passage 26 drains water flowing into the branching drain passage 26 from the fourth supply passage 24 . A valve 26A is provided in the branching drain passage 26. The valve 26A is switched between a permitting state in which water flowing from the fourth supply passage 24 is drained and a prohibiting state in which water flowing from the fourth supply passage 24 is not drained .

The water quality adjustment system 1 includes measurement sections 30 and water quality measurement sections 31. Each measurement section 30 is a measuring device for measuring the ammonia nitrogen concentration of the breeding water 10A. Each water quality measurement section 31 is a water quality measurement device for measuring the quality of the breeding water 10A. Items or values measured by the water quality measurement section 31 include water temperature, pH, salinity concentration, etc. Pieces of information representing the values measured by the measurement sections 30 and the water quality measurement sections 31 are output to the outside.

The water quality adjustment system 1 includes a judgment section 32, a calculation section 33, and an adjustment section 34. The adjustment section 34 includes a control section 35, the above-described valves 21A, 23A, and 26A, the above-described water supply valve 24A, and the above-described pump 22A. The judgment section 32, the calculation section 33, and the control section 35 are configured, for example, as an MCU (Micro Controller Unit). The pieces of information representing the values measured by the measurement sections 30 and the water quality measurement sections 31 are input to the MCU.

The judgment section 32 judges whether or not the ammonia nitrogen concentration measured by each measurement section 30 is higher than a first threshold value. The first threshold value corresponds to one example of the "threshold value." The first threshold value is, for example, a reference value which corresponds to an allowable value of the ammonia nitrogen concentration.

Here, the reference value will be described. It is known that the ratio of un-ionized ammonia to the entire ammonia (un-ionized ammonia and ammonium ion) changes depending on water temperature, pH, and salinity concentration. Specifically, the ratio of un-ionized ammonia, which is high in toxicity, tends to decrease with decrease in water temperature, tends to decrease with decrease in pH, and tends to decrease with increase in salinity concentration. Therefore, the reference value, which corresponds to the allowable value of the ammonia nitrogen concentration, increases as the temperature of the breeding water 10A decreases, increases as the pH of the breeding water 10A decreases, and increases as the salinity concentration of the breeding water 10A increases.

The reference value is calculated by the calculation section 33. The reference value is calculated on the basis of the water temperature, pH, and salinity concentration measured by the water quality measurement section 31. The reference value is calculated on the basis of the temperature of the breeding water 10A, the pH of the breeding water 10A, and the salinity concentration of the breeding water 10A. The reference value is calculated, for example, by the following formulas (1) to (6).

[Mathematical formula 1]

$$[\text{Reference value}] = A \times 100 \, / \, B \cdots \text{Formula (1)}$$

$$B = 100 \, / \, (1 + 10^x) \cdots \text{Formula (2)}$$

$$x = pK + 0.0324 \times (298 - Temp) + 0.0415 \times Press \, / \, Temp - pH \cdots \text{Formula (3)}$$

$$pK = 0.116 \times Ion + 9.245 \cdots \text{Formula (4)}$$

$$Ion \, [mol/L] = 19.9273 \times Sal \, / \, (1000 - 1.005109 \times Sal) \cdots \text{Formula (5)}$$

$$Temp = Tempdeg + 273.15 \cdots \text{Formula (6)}$$

Notably, A is 0.028786, Sal [per mill] is the measured salinity concentration, Tempdeg [°C] is the measured water temperature, Press is 1 atmospheric pressure, and pH is the measured pH.

When the judgment section 32 judges that the ammonia nitrogen concentration has exceeded the first threshold value, the adjustment section 34 performs an adjustment operation for lowering the toxic effects of ammonia of the breeding water 10A. The adjustment operation includes at least one of an operation of lowering the temperature of the breeding water 10A, an operation of lowering the pH of the breeding water 10A, and an operation of decreasing the salinity concentration of the breeding water 10A.

As described above, the ratio of un-ionized ammonia, which is high in toxicity, tends to decrease with decrease in water temperature, tends to decrease with decrease in pH, and tends to decrease with increase in salinity concentration. Accordingly, when the above-described adjustment operation is performed, the ratio of un-ionized ammonia to the entire ammonia in the breeding water 10A decreases, and, as a result, the toxic effects of ammonia in the breeding water 10A are lowered.

The operation of lowering the temperature of the breeding water 10A is an operation of supplying to the breeding tank 10 adjustment water whose temperature is lower than that of the breeding water 10A. The adjustment water is the stored water 13A whose temperature has been adjusted beforehand within the water storage tank 13 to a temperature lower than that of the breeding water 10A, or a water mixture obtained by mixing the stored water 13A and tap water such that the temperature of the water mixture becomes lower than that of the breeding water 10A. As described above, the water quality adjustment system 1 includes the temperature adjustment section 14 which adjusts the temperature of the stored water 13A in the water storage tank 13 such that the water temperature becomes lower than that of the breeding water 10A. Namely, the adjustment water is the stored water 13A adjusted by the temperature adjustment section 14 or a water mixture obtained by mixing the stored water 13A and tap water such that the temperature of the water mixture becomes lower than that of the breeding water 10A.

The adjustment section 34 performs, as the adjustment operation, an operation of supplying to the breeding tank 10 the stored water 13A whose temperature has been adjusted beforehand to a water temperature lower than that of the breeding water 10A. Specifically, the adjustment section 34 supplies the stored water 13A to the breeding tank 10 as a result of the control section 35 switching the water supply valve 24A to its permitting state and causing the pump 22A to perform the supply operation. At that time, the adjustment section 34 maintains the valves 23A and 26A in their prohibiting states.

Also, the adjustment section 34 performs, as the adjustment operation, an operation of mixing the stored water 13A and tap water such that the temperature of the resultant water mixture becomes lower than that of the breeding water 10A and supplying the water mixture to the breeding tank 10. Specifically, the adjustment section 34 supplies the water mixture to the breeding tank 10 as a result of the control section 35 switching the valve 23A and the water supply valve 24A to their permitting states and causing the pump 22A to perform the supply operation. At that time, the adjustment section 34 maintains the valves 21A and 26A in their prohibiting states.

The operation of lowering the pH of the breeding water 10A is an operation of supplying to the breeding tank 10 adjustment water whose pH is lower than that of the breeding water 10A. The adjustment water is the stored water 13A whose pH has been adjusted beforehand within the water storage tank 13 to a pH lower than that of the breeding water 10A, or a water mixture obtained by mixing the stored water 13A and tap water such that the pH of the water mixture becomes lower than that of the breeding water 10A. As described above, the water quality adjustment system 1 includes the pH adjustment section 15 which adjusts the pH of the stored water 13A in the water storage tank 13 such that the pH of the stored water becomes lower than that of the breeding water 10A. Namely, the adjustment water is the stored water 13A adjusted by the pH adjustment section 15 or a water mixture obtained by mixing the stored water 13A and tap water such that the pH of the water mixture becomes lower than that of the breeding water 10A.

The adjustment section 34 performs, as the adjustment operation, an operation of supplying to the breeding tank 10 the stored water 13A whose pH has been adjusted beforehand to a pH lower than that of the breeding water 10A. Specifically, the adjustment section 34 supplies the stored water 13A to the breeding tank 10 as a result of the control section 35 switching the water supply valve 24A to its permitting state and causing the pump 22A to perform the supply operation. At that time, the adjustment section 34 maintains the valves 23A and 26A in their prohibiting states.

Also, the adjustment section 34 performs, as the adjustment operation, an operation of mixing the stored water 13A and tap water such that the pH of the resultant water mixture becomes lower than that of the breeding water 10A and supplying the water mixture to the breeding tank 10. Specifically, the adjustment section 34 supplies the water mixture to the breeding tank 10 as a result of the control section 35 switching the valve 23A and the water supply valve 24A to their permitting states and causing the pump 22A to perform the supply operation. At that time, the adjustment section 34 maintains the valves 21A and 26A in their prohibiting states.

The operation of increasing the salinity concentration of the breeding water 10A is an operation of supplying to the breeding tank 10 adjustment water whose salinity concentration is higher than that of the breeding water 10A. The adjustment water is the stored water 13A whose salinity concentration has been adjusted beforehand within the water storage tank 13 to a salinity concentration higher than that of the breeding water 10A, or a water mixture obtained by mixing the stored water 13A and tap water such that the salinity concentration of the water mixture becomes higher than that of the breeding water 10A.

The adjustment section 34 performs, as the adjustment operation, an operation of supplying to the breeding tank 10 the stored water 13A whose salinity concentration has been adjusted beforehand to a salinity concentration higher than that of the breeding water 10A. Specifically, the adjustment section 34 supplies the stored water 13A to the breeding tank 10 as a result of the control section 35 switching the water supply valve 24A to its permitting state and causing the pump 22A to perform the supply operation. At that time, the adjustment section 34 maintains the valves 23A and 26A in their prohibiting states.

Also, the adjustment section 34 performs, as the adjustment operation, an operation of mixing the stored water 13A and tap water such that the salinity concentration of the resultant water mixture becomes higher than that of the breeding water 10A and supplying the water mixture to the breeding tank 10. Specifically, the adjustment section 34 supplies the water mixture to the breeding tank 10 as a result of the control section 35 switching the valve 23A and the water supply valve 24A to their permitting states and causing the pump 22A to perform the supply operation. At that time, the adjustment section 34 maintains the valves 21A and 26A in their prohibiting states.

The adjustment section 34 determines the amount of adjustment water on the basis of the ammonia nitrogen concentration measured by the measurement section 30 and supplies the determined amount of adjustment water to the breeding tank 10. The adjustment section 34 stores beforehand, for example, correspondence data representing the relation between the ammonia nitrogen concentration and the required amount of adjustment water. The amount of adjustment water may be determined on the basis of this correspondence data and the ammonia nitrogen concentration measured by the measurement section 30. The correspondence data may be in the form of a table or an arithmetic expression.

Alternatively, the adjustment section 34 may determine the amount of adjustment water such that a second threshold value calculated by the calculation section 33 becomes greater than the ammonia nitrogen concentration. The second threshold value may be, for example, the reference value. Namely, the second threshold value may be the same as the first threshold value. Alternatively, the second threshold value may be a value equal to or less than the reference value. For example, the second threshold value may be a value obtained by subtracting from the reference value a predetermined value greater than 0, or a value obtained by multiplying the reference value by a predetermined coefficient greater than 0 and less than 1.

In the adjustment operation, the adjustment section 34 supplies dividingly the determined amount of adjustment water to the breeding tank 10 in a plurality of operations. The number of times may be changed in accordance with the determined amount. For example, in the case where the determined amount is greater than (N - 1) times a predetermined upper limit amount Q and equal to or less than N times the upper limit amount Q, the adjustment section 34 may divide the determined amount of adjustment water to N portions and supply the portions in N times.

Also, the control section 35 controls each drain valve 11B and the drain pump 11C. The control section 35 controls the drain valve 11B to its drain state and activating the drain pump 11C, thereby draining the breeding water 10A in the breeding tank 10. During at least a portion of the period during which the control section 35 controls the water supply valve 24A to its permitting state, the control section 35 controls the drain valve 11B to its drain state, thereby draining the breeding water 10A in the breeding tank 10 in parallel with the adjustment operation.

The drain amount; i.e., the amount of the breeding water drained from the drain pipe 11A, may be determined beforehand or may not be determined beforehand. In the case where the drain amount is determined beforehand, the drain amount may be the same as the amount of adjustment water supplied to the breeding tank 10 or may differ from the amount of adjustment water supplied to the breeding tank 10. In the case where the drain amount is determined beforehand, the control section 35 may drain the drain amount of breeding water at a time or in a plurality of operations. In the case where the drain amount is not determined beforehand, the condition for stopping the drainage may be that the ammonia nitrogen concentration of the breeding water 10A in the breeding tank 10 becomes equal to or less than a stoppage threshold value, that the water level in the breeding tank 10 becomes equal to or lower than a predetermined position, or other conditions.

The following description relates to effects of the water quality adjustment system 1 of the first embodiment.

The adjustment section 34 of the water quality adjustment system 1 performs, as an adjustment operation, an operation of lowering the temperature of the breeding water 10A, an operation of lowering the pH of the breeding water 10A, or an operation of increasing the salinity concentration of the breeding water 10A when the judgment section 32 judges that the ammonia nitrogen concentration has exceeded the threshold value. When the adjustment operation is performed, of un-ionized ammonia ($NH_3$) and ammonium ion ($NH4^+$) contained in the breeding water, the amount of un-ionized ammonia, which is high in toxicity, is lowered; i.e., the ratio of the un-ionized ammonia decreases. As a result, the toxic effects of ammonia in the breeding water 10A are lowered. Namely, the water quality adjustment system 1 can lower the toxic effects of ammonia in the breeding water 10A without lowering the ammonia concentration of the breeding water 10A.

Furthermore, the adjustment operation is an operation of supplying to the breeding tank 10 the adjustment water which is lower in temperature, lower in pH, and higher in salinity concentration than the breeding water 10A. The water quality adjustment system 1 can lower the ratio of the un-ionized ammonia, which is high in toxicity, by supplying the adjustment water to the breeding tank 10, thereby lowering the toxic effects of ammonia in the breeding water 10A.

Furthermore, the adjustment section 34 determines the amount of adjustment water on the basis of the ammonia nitrogen concentration measured by the measurement section 30. Therefore, the water quality adjustment system 1 can lower the toxic effects of ammonia in the breeding water 10A more appropriately as compared with a configuration in which a fixed amount of adjustment water is supplied in the adjustment operation.

Furthermore, in the adjustment operation, the adjustment section 34 supplies dividingly the determined amount of adjustment water to the breeding tank 10 in a plurality of operations. Therefore, the water quality adjustment system 1 can prevent sudden changes of the quality of the breeding water 10A, which would otherwise result in adverse influences on the aquatic organism.

Furthermore, the water quality adjustment system 1 includes the drain section 11 having the drain valves 11B. Therefore, the water quality adjustment system 1 can drain the breeding water 10A in the breeding tank 10 from the drain section 11.

Furthermore, during at least a portion of the period during which the control section 35 controls the water supply valve 24A to its permitting state, the control section 35 controls the drain valve 11B to its drain state, thereby draining the breeding water 10A in the breeding tank 10 in parallel with the adjustment operation. Therefore, the water quality adjustment system 1 can prevent the amount of the breeding water 10A in the breeding tank 10 from increasing when the breeding water 10A is supplied to the breeding tank 10.

<Second embodiment>

In the first embodiment, the water quality adjustment system 1 is configured to determine the amount of adjustment water and supply the determined amount of adjustment water to the breeding tank 10. However, the water quality adjustment system 1 may have a different configuration. A second embodiment is one example of the different configuration.

In the second embodiment, the adjustment section 34 starts the adjustment operation when the judgment section 32 judges that the ammonia nitrogen concentration has exceeded the first threshold value. Specifically, the adjustment section 34 starts the supply of adjustment water to the breeding tank 10. After having started the adjustment operation, the adjustment section 34 repeats a process of calculating the second threshold value by using the calculation section 33 and a process of judging whether or not the calculated second threshold value has exceeded the ammonia nitrogen concentration measured by the measurement section 30. In the case where the second threshold value has not yet exceeded the ammonia nitrogen concentration measured by the measurement section 30, the adjustment section 34 continues the adjustment operation. In the case where the second threshold value has exceeded the ammonia nitrogen concentration measured by the measurement section 30, the adjustment section 34 stops the adjustment operation.

As described above, the water quality adjustment system 1 of the second embodiment continues the adjustment operation until the second threshold value exceeds the ammonia nitrogen concentration measured by the measurement section 30 and stops the adjustment operation when the second threshold value has exceeded the ammonia nitrogen concentration measured by the measurement section 30. Therefore, the water quality adjustment system 1 of the second embodiment can lower the toxic effects of ammonia in the breeding water 10A to a desired level more reliably.

<Other embodiments>

The present invention is not limited to the embodiments described by the above description with reference to the drawings. For example, embodiments as described below fall within the technical scope of the present invention. Also, various features of the above-described embodiments and embodiments which will be described below can be combined in any manner so long as no contradiction occurs.

In the above-described embodiments, the threshold value (first threshold value) is the reference value. However, the threshold value is not required to be the reference value and may be, for example, a value determined beforehand.

In the above-described embodiments, the measurement section and the water quality measurement section are configured as separate devices. However, the measurement section and the water quality measurement section may be configured as a single device.

In the above-described embodiments, all of the temperature of the breeding water, the pH of the breeding water, and the salinity concentration of the breeding water are adjusted in the adjustment operation. However, the temperature, pH, and salinity concentration of the breeding water may be selectively adjusted. In the case where only the selected item(s) is adjusted, it is preferred that the remaining item(s) does not change. For example, in the case where only the temperature of the breeding water is adjusted, it is preferred that the pH and the salinity concentration do not change.

In the above-described embodiments, the adjustment water satisfies all of the condition that the temperature of the adjustment water is lower than that of the breeding water, the condition that the pH of the adjustment water is lower than that of the breeding water, and the condition that the salinity concentration of the adjustment water is higher than that of the breeding water. However, the adjustment water may be prepared to satisfy only a part of the conditions.

The adjustment operation is not limited to those employed in the above-described embodiments. For example, in the case where a heater is provided in each breeding tank, the operation of lowering the temperature of the breeding water may be an operation of stopping the heater. Also, in the case where the temperature of tap water is lower than the temperature of the breeding tank, the operation of lowering the temperature of the breeding water may be an operation of supplying tap water to the breeding tank.

In the above-described first embodiment, the adjustment operation is an operation of supplying adjustment water to the breeding tank in an amount determined on the basis of the ammonia nitrogen concentration. However, the adjustment operation may be an operation of supplying a predetermined amount of adjustment water to the breeding tank.

In the above-described first embodiment, the control section 35 is configured to control the drain valve 11B to its drain state at least in a portion of the period during which the control section 35 controls the water supply valve 24A to its permitting state. However, the control section 35 is not limited to this configuration. For example, the control section 35 may control the drain valve 11B to its drain state before switching the water supply valve 24A to its permitting state, or may control the drain valve 11B to its drain state after switching the water supply valve 24A to its prohibiting state. In the case where the control section 35 controls the drain valve 11B to its drain state before switching the water supply valve 24A to its permitting state, the amount of the breeding water 10A in the breeding tank 10 can be lowered before supply of the adjustment water, whereby adjustment of the ammonia nitrogen concentration of the breeding water 10A is facilitated.

Notably, the embodiments disclosed this time should be considered to be illustrative and not to be restrictive in all aspects. The scope of the present invention is not limited to the embodiments disclosed this time, and it is intended that the present invention encompasses all modifications within the range shown by the claims and the range of equivalents of the claims.

REFERENCE SIGNS LIST

1: water quality adjustment system
10: breeding tank
10A: breeding water
11: drain section
11A: drain pipe
11B: drain valve
24A: water supply valve
30: measurement section
31: water quality measurement section
32: judgment section
33: calculation section
34: adjustment section
35: control section

**Claims**

1. A water quality adjustment system comprising:

   a measurement section which measures the ammonia nitrogen concentration of breeding water in a breeding tank for breeding an aquatic organism;
   a judgment section which judges whether or not the ammonia nitrogen concentration measured by the measurement section has exceeded a threshold value; and
   an adjustment section configured such that, when the judgment section judges that the ammonia nitrogen concentration has exceeded the threshold value, the adjustment section performs, as an adjustment operation, at least one of an operation of lowering the temperature of the breeding water, an operation of lowering the pH of the breeding water, and an operation of increasing the salinity concentration of the breeding water.

2. The water quality adjustment system according to claim 1, wherein the adjustment operation is an operation of supplying adjustment water to the breeding tank, the adjustment water satisfying at least one of a condition that the temperature of the adjustment water is lower than that of the breeding water, a condition that the pH of the adjustment water is lower than that of the breeding water, and a condition that the salinity concentration of the adjustment water is higher than that of the breeding water.

3. The water quality adjustment system according to claim 2, wherein the adjustment section determines an amount of the adjustment water on the basis of the ammonia nitrogen concentration measured by the measurement section.

4. The water quality adjustment system according to claim 3, wherein, in the adjustment operation, the adjustment section dividingly supplies the determined amount of the adjustment water to the breeding tank in a plurality of operations.

5. The water quality adjustment system according to claim 2, further comprising a drain section including a drain valve provided in a drain pipe connected to the breeding tank,
   wherein the drain valve is switched between a water drain state for draining the breeding water in the breeding tank from the drain pipe and a water stoppage state for stopping the drainage of the breeding water through the drain valve.

6. The water quality adjustment system according to claim 5, wherein the adjustment section includes a water supply valve provided in a supply passage for supplying the adjustment water to the breeding tank, and a control section for controlling the water supply valve, wherein

the water supply valve is switched between a permitting state for permitting flow of water toward the breeding tank and a prohibiting state for prohibiting the flow of water toward the breeding tank, the adjustment section performs the adjustment operation of supplying the adjustment water to the breeding tank as a result of the control section switching the water supply valve to the permitting state, and during at least a portion of a period during which the control section controls the water supply valve to the permitting state, the control section controls the drain valve to the drain state, thereby draining the breeding water in the breeding tank in parallel with the adjustment operation.

7. The water quality adjustment system according to any one of claims 1 to 6, further comprising:

a water quality measurement section which measures at least one of the temperature of the breeding water, the pH of the breeding water, and the salinity concentration of the breeding water; and a calculation section which calculates a second threshold value on the basis of the value(s) measured by the water quality measurement section, wherein the adjustment section stops the adjustment operation when the second threshold value exceeds the ammonia nitrogen concentration measured by the measurement section.

FIGURE

TAP WATER

pH ADJUSTMENT SECTION — 15

FILTER — 21B

FILTER — 23B

SALINITY CONCENTRATION METER — 16

TEMPERATURE ADJUSTMENT SECTION — 14

CONTROL SECTION — 35

CALCULATION SECTION — 33

JUDGMENT SECTION — 32

MEASUREMENT SECTION — 30, 10A

WATER QUALITY MEASUREMENT SECTION — 31

DRAINAGE

1, 10, 11, 11A, 11B, 11C, 12, 13, 13A, 21, 21A, 22, 22A, 23, 23A, 24, 24A, 25, 26, 26A, 34

EP 4 289 264 A1

11

# EP 4 289 264 A1

| INTERNATIONAL SEARCH REPORT | International application No. |
|---|---|
| | PCT/JP2022/043454 |

## A. CLASSIFICATION OF SUBJECT MATTER

***A01K 63/06***(2006.01)i
FI:  A01K63/06 B

According to International Patent Classification (IPC) or to both national classification and IPC

## B. FIELDS SEARCHED

Minimum documentation searched (classification system followed by classification symbols)

A01K63/06

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| Y | JP 2021-13361 A (NGK SPARK PLUG CO) 12 February 2021 (2021-02-12) claims, paragraphs [0015], [0020], [0047], [0048] | 1-7 |
| Y | JP 6236575 B1 (NIKKEN LEASE KOGYO CO., LTD.) 22 November 2017 (2017-11-22) paragraphs [0009]-[0013] | 1-7 |
| Y | JP 2021-52613 A (SEI CO LTD) 08 April 2021 (2021-04-08) paragraph [0074] | 1-7 |
| Y | JP 2010-193902 A (KAKEI GAKUEN) 09 September 2010 (2010-09-09) paragraph [0023] | 1-7 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **20 January 2023** | **31 January 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

# EP 4 289 264 A1

**INTERNATIONAL SEARCH REPORT**
Information on patent family members

International application No.

**PCT/JP2022/043454**

| Patent document cited in search report | | | Publication date (day/month/year) | Patent family member(s) | | | Publication date (day/month/year) |
|---|---|---|---|---|---|---|---|
| JP | 2021-13361 | A | 12 February 2021 | US | 2022/0240456 | A1 | |
| | | | | claims, paragraphs [0036], [0041], [0076], [0077] | | | |
| | | | | WO | 2021/010398 | A1 | |
| | | | | EP | 4000392 | A1 | |
| | | | | CN | 114270379 | A | |
| JP | 6236575 | B1 | 22 November 2017 | WO | 2018/229940 | A1 | |
| | | | | paragraphs [0009]-[0015] | | | |
| | | | | EP | 3639659 | A1 | |
| | | | | TW | 201904435 | A | |
| | | | | KR | 10-2020-0008025 | A | |
| | | | | CN | 110809400 | A | |
| | | | | AU | 2017418814 | A | |
| JP | 2021-52613 | A | 08 April 2021 | (Family: none) | | | |
| JP | 2010-193902 | A | 09 September 2010 | (Family: none) | | | |

Form PCT/ISA/210 (patent family annex) (January 2015)

**EP 4 289 264 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2021029144 A